(19) Europäisches Patentamt
European Patent Office
Office européen des brevets

(11) **EP 3 613 787 A1**

(12) **EUROPÄISCHE PATENTANMELDUNG**

(43) Veröffentlichungstag:
**26.02.2020   Patentblatt 2020/09**

(21) Anmeldenummer: **18190762.7**

(22) Anmeldetag: **24.08.2018**

(51) Int Cl.:
*C08G 18/79* (2006.01)        *C08G 63/16* (2006.01)
*C09D 175/06* (2006.01)        *C08G 18/42* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **POLYURETHANE MIT VERBESSERTER HÄRTE**

(57)      Die vorliegende Erfindung betrifft Polyesterpolyole mit besonderer Reinheit und ihre Verwendung zur Herstellung von Polyurethanen mit verbesserten Eigenschaften, insbesondere mit verbesserter Härte.

**EP 3 613 787 A1**

**Beschreibung**

Die vorliegende Erfindung betrifft Polyesterpolyole mit besonderer Reinheit und ihre Verwendung zur Herstellung von Polyurethanen mit verbesserten Eigenschaften, insbesondere mit verbesserter Härte.

Polyurethane sind eine dem Fachmann gut bekannte Klasse von Kunststoffen. Sie werden durch die Additionsreaktion von mehrwertigen Alkoholen mit Polyisocyanaten hergestellt. Als mehrwertige Alkohole sind grundsätzlich viele Verbindungen mit wenigstens zwei Hydroxylgruppen pro Molekül geeignet. Dies können monomere Verbindungen wie z.B. Glycerin sein. Technisch und wirtschaftlich bedeutender sind jedoch mehrwertige Alkohole, die selbst bereits Polymere sind. Insbesondere werden Polycarbonatpolyole, Polyesterpolyole, Polyetherpolyole, Polyethercarbonatpolyole oder Polyetherester eingesetzt.

Polycarbonatpolyole werden durch eine Kondensationsreaktion von niedermolekularen Carbonaten und niedermolekularen mehrwertigen Alkoholen erhalten. Das molare Verhältnis von Carbonat und Polyol determiniert hierbei die Molmasse des Polycarbonatpolyols. Um zu hydroxylfunktionellen Endprodukten zu gelangen, verwendet man einen molaren Überschuss an Polyol. Vielfach enthält der verwendete niedermolekulare Alkohol Verunreinigungen. So enthält 1,6-Hexandiol häufig auch 1,4-Cyclohexandiol. Wenn diese Verunreinigungen in das Polyol eingebaut werden, entstehen Produkte, die neben primären OH-Gruppen auch sekundäre OH-Gruppen besitzen.

EP 2 213 696 hat gezeigt, dass ein hoher Anteil von Nebenprodukten mit sekundären Hydroxylgruppen dazu führt, dass die aus dem entsprechenden Polycarbonat hergestellten Polyurethane eine geringere Reißfestigkeit und eine geringere Beständigkeit gegenüber Ölsäure aufwiesen. Ein nennenswerter Einfluss des Anteils an sekundären Hydroxylgruppen im Polycarbonatpolyol auf die Härte des daraus hergestellten Polyurethans ist nicht erkennbar.

Polyesterpolyole werden durch eine Kondensationsreaktion von mehrwertigen Carbonsäuren und mehrwertigen Alkoholen hergestellt. Das Mengenverhältnis beider Komponenten wird so gewählt, dass ein molarer Überschuss an Hydroxylgruppen im Reaktionsgemisch vorliegt und das entstehende Polymer deswegen freie, endständige Hydroxylgruppen besitzt. Üblicherweise zur Herstellung von Polyurethanen verwendete Polyesterpolyole haben ein zahlenmittleres Molekulargewicht zwischen 500 und 4000 g/mol und eine durchschnittliche OH-Funktionalität zwischen 1,8 und 3,5. Sie können aber auch Molekulargewichte unter 500 und über 4000 Da aufweisen; ebenso Funktionalitäten von unter 1,80 und über 3,5. Gängige Polyesterpolyole und geeignete Herstellungsverfahren sind beschrieben in M. Ionescu, Chemistry and Technology of Polyols for Polyurethanes, Rapra Technology Ltd., Shawbury 2005, Kap. 8 und 16 oder J.H. Saunders und K.C. Frisch in Polyurethanes, Chemistry and Technology, Part I Chemistry, Inscience Publishers John Wiley& Sons, New York, 1962, Kap. II. Auch bei diesem Prozess können durch die Anwesenheit von Verunreinigungen im Alkohol Polyole mit sekundären OH-Gruppen entstehen wie oben beschrieben.

Die der vorliegenden Anmeldung zugrunde liegende Studie hat überraschend gezeigt, dass bei der Herstellung von Polyurethanen mit Polyesterpolyolen auch die Härte des entstandenen Produkts ganz wesentlich vom Anteil der sekundären Hydroxylgruppen im Polyesterpolyol beeinflusst wird. Ein konsistenter Einfluss auf die Reißfestigkeit wie in EP 2 213 696 beschrieben konnte entgegen der Erwartung nicht beobachtet werden.

Deswegen betrifft die vorliegende Patentanmeldung Polyesterpolyole mit geringem Gehalt an sekundären Hydroxylgruppen, sowie deren Verwendung zur Herstellung von Polyurethanen mit verbesserter Härte.

In einer ersten Ausführungsform betrifft die vorliegende Erfindung ein Polyesterpolyol mit einem Anteil von sekundären OH-Gruppen an der Gesamtmenge der terminalen OH-Gruppen von höchstens 5 %.

Die Polyesterpolyole weisen OH-Zahlen von 18 bis 300 mg KOH/g auf und bestehen zu mindestens 95 Gew.-%, bevorzugt mindestens 98 Gew.-% aus bifunktionellen Aufbaukomponenten. Die auf 100% fehlenden Gew.-% können sowohl mehr als bifunktionell, beispielsweise trifunktionell oder tetrafunktionell aber auch monofunktionell sein, wobei selbstverständlich auch Gemische aus beispielsweise tri- und tetrafunktionellen Aufbaukomponenten möglich sind. Beispiele für trifunktionelle Aufbaukomponenten sind Glycerin, 1,1,1-Trimethylolpropan, Pentaerythrit, 1,2,3-Benzoltricarbonsäure, 1,3,5-Benzoltricarbonsäure, 1,2,4-Benzoltricarbonsäure, Äpfelsäure und Weinsäure.

Besonders bevorzugt sind im Rahmen der vorliegenden Erfindung jedoch Polyesterpolyole, die aus ausschließlich bifunktionellen Aufbaukomponenten erhältlich sind.

Einzelne oder mehrere der Aufbaukomponenten können biobasiert sein, d.h. aus nachwachsenden Rohstoffen und/oder mittels wenigstens eines fermentativen Verfahrensschrittes hergestellt sein.

Als Aufbaukomponenten für die erfindungsgemäßen Polyesterpolyole kommen

a.) wenigstens eine aromatische und/oder aliphatische Dicarbonsäure und/oder Dicarbonsäureäquivalent und
b) wenigstens ein lineares und/oder verzweigtes aliphatisches Diol mit ausschließlich primären Hydroxylgruppen und/oder ggf.
c) wenigstens eine aliphatische Hydroxycarbonsäure mit primärer Hydroxylgruppe, welche auch in Form eines Lactons vorliegen kann

zum Einsatz

Als Aufbaukomponente a) können prinzipiell alle aliphatischen und/oder aromatischen Dicarbonsäuren mit 4 bis 12 Kohlenstoffatomen, sowie deren Anhydride oder niedermolekulare Diester als Dicarbonsäureäquivalente eingesetzt werden.

Als Aufbaukomponente b) können prinzipiell alle aliphatischen Diole mit 2 bis 14 Kohlenstoffatomen eingesetzt werden. Die aliphatischen Diole mit 2 bis 14 Kohlenstoffatomen sind linear, können aber auch ein oder mehrere Alkylseitenketten aufweisen.

Als Aufbaukomponente a) sind beispielsweise geeignet: Phthalsäure, Isophthalsäure, Terephthalsäure, Tetrahydrophthalsäure, Hexahydrophthalsäure, Cyclohexandicarbonsäure, Bernsteinsäure, Glutarsäure, Adipinsäure, Azelainsäure, Sebacinsäure, Tetrachlorphthalsäure, Maleinsäure, Bernsteinsäure, Fumarsäure, Korksäure, Nonandicarbonsäure, Decandicarbonsäure, Dodecandicarbonsäure, 2-Methylbernsteinsäure, 3,3-Diethylglutarsäure und 2,2-Dimethylbernsteinsäure. Als Säurequelle können auch die entsprechenden analogen Anhydride und/oder niedermolekulare Diester verwendet werden, die im Rahmen dieser Erfindung als Diarbonsäureäquivalente bezeichnet werden.

Als Komponente a) eignen sich besonders lineare, unverzweigte Dicarbonsäuren mit 4 bis 10 C-Atomen, Adipinsäure, Bernsteinsäure, Phthalsäure, Isophthalsäure und Terephthalsäure sowie die Dicarbonsäureäquivalente der vorgenannten Verbindungen. Beispielhaft seien genannt: Phthalsäureanhydrid, Bernsteinsäureanhydrid, Terephthalsäuredimethylester, Terephthalsäurediethylester.

Als Aufbaukomponente b) sind beispielsweise geeignet: Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Decandiol, 2-Methyl-Propandiol-1,3, 2,2-Dimethyl-Propandiol-1,3, 3-Methylpentandiol-1,5.

Als Komponente b) eignen sich besonders lineare, unverzweigte Diole mit 2 bis 12 C-Atomen ausgewählt aus der Gruppe bestehend aus Ethylenglykol, 1,3-Propandiol, 1,4-Butandiol, 1,5-Pentandiol, 1,6-Hexandiol, 1,10-Decandiol, 1,12-Decandiol und 2,2-Dimethyl-Propandiol-1,3.

Als Komponente c) kommen lineare, unverzweigte Hydroxycarbonsäuren mit $\geq 6$ und $\leq 10$ C-Atomen in Betracht. Besonders bevorzugt 6-Hydroxycapronsäure und $\varepsilon$-Caprolacton.

Wie allgemein bekannt, bestimmen die molaren Mengenverhältnisse der Komponenten a), b) und ggf. c) den mittleren Polymerisationsgrad der Polyesterpolyole. Die Komponenten müssen in jedem Fall so zusammengestellt sein, dass die Anzahl der eingesetzten Hydroxylgruppen die Anzahl der eingesetzten Carboxylgruppen übersteigt.

Die Polyesterpolyole werden in an sich bekannter Weise durch Polykondensation hergestellt. Dabei kann in der Weise vorgegangen werden, dass die Komponenten a), b) und ggf. c) gemeinsam vorgelegt; man kann sie aber auch in mehreren Stufen einsetzen.

Als Katalysatoren kommen im Prinzip sämtliche für die Herstellung von Polyestern bekannte Katalysatoren in Frage. Dies sind beispielsweise Zinn-Salze, z.B. Zinndichlorid, Titanate, z.B. Tetrabutyltitanat, Bismut-Salze, z.B. Bismutacetat und Bismutneodecanoat oder starke Säuren, z.B. p-Toluolsulfonsäure und Schwefelsäure. Die Polyester können aber auch ohne den Einsatz von Katalysatoren hergestellt werden.

Normalerweise werden die Polyester ohne Verwendung eines Lösungsmittels hergestellt. Sie können jedoch auch unter Zusatz eines Lösungsmittels hergestellt werden, insbesondere eines wasserschleppenden Lösungsmittel (Azeotropveresterung), wie etwa Benzol, Toluol oder Dioxan. Das Austragen des Reaktionswassers in der lösungsmittelfreien Variante wird normalerweise durch Anlegen eines Unterdrucks, insbesondere gegen Ende der Veresterung, unterstützt. Hierbei werden Drucke von 1 bis 500 mbar angewendet. Eine Veresterung ist jedoch auch oberhalb 500 mbar möglich. Das Austragen des Reaktionswassers kann hierbei auch durch Durchleiten eines inerten Gases, etwa Stickstoff oder Argon, unterstützt werden.

Die Reaktion wird bei erhöhter Temperatur ausgeführt. Üblich sind in der lösungsmittelfreien Variante hierbei Reaktionstemperaturen von 100 bis 250 °C, bevorzugt 160 bis 230 °C. Bei der Azeotropveresterung wird die Reaktionstemperatur durch Art und Menge des Schleppmittels bestimmt und liegt meist im Bereich von 100 bis 180 °C.

Die Reaktion wird bis zu einem Umsatz geführt, bei dem die Säurezahl der erfindungsgemäßen Polyesterpolyole höchstens 10, bevorzugt höchstens 5, besonders bevorzugt höchstens 2 und ganz besonders bevorzugt < 1 mg KOH/g beträgt.

Der Anteil an sekundären Hydroxylgruppen an der Gesamtmenge der im Polyesterpolyol vorliegenden Hydroxylgruppen liegt bei höchstens 5 mol-%, bevorzugt bei höchstens 2 mol-% und noch stärker bevorzugt bei 1 mol-%.

Der Anteil wird vorzugsweise mittels $^{13}$C-NMR bei einer Messfrequenz von 151,0 MHz in Chloroformd1 bestimmt. Der Anteil an primären Hydroxylgruppen ($CH_2$-OH) wird vorzugsweise nach folgender Formel bestimmt:

$$\text{Anteil } CH_2\text{-OH} = F(\text{Signal } CH_2\text{-OH}) \,/\, (F(\text{Signal } CH_2\text{-OH}) + F(\text{Signal } CH\text{-OH})) * 100\,\%$$

Hierbei ist F die Fläche des jeweiligen Signals im NMR-Spektrum und CH-OH steht für sekundär gebundene OH-Gruppen.

Eine besonders bevorzugte, vollständige Messmethode ist in den Ausführungsbeispielen offenbart.

Um Polyesterpolyole mit dem erfindungsgemäß erforderlichen geringen Gehalt an sekundären Hydroxylgruppen zu erhalten, müssen hinreichend reine Alkohole zur Herstellung des Polyesters verwendet werden. Die Eignung eines Alkohols für die Herstellung eines erfindungsgemäß geeigneten Polyesterpolyols kann durch gängige Analyseverfahren wie Gaschromatographie oder Hochleistungsflüssigkeitschromatographie überprüft werden.

In der vorliegenden Studie zugrunde liegenden Studie hat sich überraschend gezeigt, dass die Verunreinigung des zur Herstellung des Polyesterpolyols verwendeten Alkohols mit Verbindungen, die sekundäre OH-Gruppen enthalten, zu einer überproportional hohen Zunahme des Anteils sekundärer OH-Endgruppen im Produkt führt. So hat ein Mengenanteil von 4,3 mol-% 1,4-Cyclohexandiol an der Gesamtmenge von Hexandiol und 1,4-Cyclohexandiol zu einem Anteil von 8 mol-% sekundären OH-Endgruppen im Polyester geführt.

Deswegen ist es zur Einhaltung der oben genannten Mengenanteile sekundärer OH-Endgruppen von 5,0 mol-%, 2,0 mol-% und 1,0 mol-% an der Gesamtmenge der OH-Endgruppen des Polyesterpolyols bevorzugt, dass im für die Herstellung des Polyesterpolyols verwendeten Reaktionsgemisch die Mengenanteile aller Polyole mit wenigstens einer sekundären OH-Gruppe maximal bei der Hälfte des jeweils für das fertige Polyesterpolyol angestrebten Wertes liegen. Das bedeutet für die vorgenannten Maximalwerte im Polyesterpolyol Obergrenzen von höchstens 2,5 mol-%, höchstens 1,0 mol-% bzw. höchstens 0,5 mol-%. Es ist insbesondere bevorzugt, dass die Summe der Mengenanteile von 1,4-Cyclohexandiol, 2,2,4-Trimethylpentan-1,3-diol und 2,3-Dihydroxybutandiol die vorgenannten Werte nicht überschreitet.

**Polymerisierbare Zusammensetzung**

In einer weiteren Ausführungsform betrifft die vorliegende Erfindung eine polymerisierbare Zusammensetzung enthaltend wenigstens ein Polyesterpolyol mit dem weiter oben in dieser Ameldung definierten maximalen Gehalt an an sekundären OH-Gruppen bezogen auf die Gesamtmenge der vorhandenen terminalen OH-Gruppen und wenigstens ein Polyisocyanat.

Alle oben für das Polyesterpolyol gegebenen Definitionen gelten auch für diese Ausführungsform.

**Isocyanat**

Der Begriff "Polyisocyanat" bezeichnet Moleküle mit einer durchschnittlichen Isocyanatfunktionalität von wenigstens 2. Geeignete Polyisocyanate sind aromatische, araliphatische, aliphatische oder cycloaliphatische Polyisocyanate. Es können auch Mischungen solcher Polyisocyanate eingesetzt werden. Bevorzugte Polyisocyanate sind ausgewählt aus der Gruppe bestehend aus Butylendiisocyanat, Hexamethylendiisocyanat (HDI), 1,5-Pentamethylendiisocyanat (PDI), Isophorondiisocyanat (IPDI), 2,2,4 und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat und deren Derivate mit Urethan-, Isocyanurat-, Allophanat-, Biuret-, Uretdion-, Iminooxadiazindionstruktur. Weiterhin bevorzugt sind Mischungen derselben. Besonders bevorzugt sind Hexamethylendiisocyanat, Isophorondiisocyanat und die isomeren Bis(4,4'-isocyanatocyclohexyl)methane sowie deren Mischungen.

**Verhältnis NCO: OH**

Die polymerisierbare Zusammensetzung ist vorzugsweise dadurch gekennzeichnet, dass das molare Verhältnis von Isocyanatgruppen zu Hydroxylgruppen des wenigstens einen Polyesterpolyols zwischen 0,7 : 1,0 und 2,5 zu 1,0, stärker bevorzugt zwischen 0,8 : 1,0 und 2,0 zu 1,0 und noch stärker bevorzugt zwischen 0,9 : 1,0 und 1,8 : 1,0 liegt.

**Katalysator**

Bevorzugt enthält die erfindungsgemäße polymerisierbare Zusammensetzung zusätzlich wenigstens einen Katalysator, der die Bildung von Urethangruppen aus Hydroxyl- und Isocyanatgruppen beschleunigt. Hierfür sind alle dem Fachmann bekannten Urethanisierungskatalysatoren einsetzbar wie z.B. Metallorganische Verbindungen und tertiäre Amine. Besonders bevorzugt sind Zinn-Dioctoat, Dibutylzinn-Dilaurat, Triethylamin, 1,4-Diazabicyclo-[2,2,2]-octan und Bismutdioctoat.

**Verwendung**

In noch einer weiteren Ausführungsform betrifft die vorliegende Erfindung die Verwendung eines Polyesterpolyols oder einer polymerisierbaren Zusammensetzung wie oben in dieser Anmeldung definiert zur Herstellung eines Polyurethankunststoffs.

Alle oben für das Polyesterpolyol und die polymerisierbare Zusammensetzung gegebenen Definitionen gelten auch für diese Ausführungsform.

Besonders bevorzugt ist die Verwendung eines Polyesterpolyols oder einer polymerisierbaren Zusammensetzung zur Herstellung eines Polyurethankunststoffs mit besonders hoher Härte. "Besonders hohe Härte" bezeichnet hierbei die Verbesserung der Härte des erfindungsgemäß hergestellten Polyurethankunststoffs gegenüber Polyurethankunststoffen, die aus Polyesterpolyolen mit höherem Anteil an sekundären Hydroxylgruppen hergestellt wurden. Insbesondere weist ein mit einem erfindungsgemäßen Polyesterpol, welches durch einen Anteil an sekundären Hydroxylgruppen an der Gesamtmenge an terminalen Hydroxylgruppen von höchstens 2 mol-% gekennzeichnet ist, hergestellter Polyurethankunststoff eine Shore-D-Härte auf, die wenigstens 3 mol-% höher ist, als die Härte eines Polyurethankunststoffs, der mit einem Polyesterpolyol mit einem Gehalt an sekundären Hydroxylgruppen von wenigstens 5 mol-% der Gesamtheit der terminalen Hydroxylgruppen hergestellt wurde. Die Shore-D-Härte wird bevorzugt gemäß DIN ISO 7619-1 in der Fassung vom Februar 2012 gemessen.

In einer besonders bevorzugten Ausführungsform der vorliegenden Erfindung besteht die Alkohol-Komponente des Polyesterpolyols zu wenigstens 90 Gew.-%, stärker bevorzugt zu wenigstens 95 Gew.-% aus 1,6-Hexandiol. Hierbei weist der Polyurethankunststoff eine Shore-D-Härte auf, die wenigstens um 8 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- %gemessen wird.

In einer weiteren besonders bevorzugten Ausführungsform der vorliegenden Erfindung besteht die Alkohol-Komponente des Polyesterpolyols zu wenigstens 90 Gew.-%, stärker bevorzugt zu wenigstens 95 Gew.-%, aus 1,6-Hexandiol. Hierbei weist der Polyurethankunststoff eine Pendelhärte nach König auf, die wenigstens um 5 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- %gemessen wird.

In einer weiteren besonders bevorzugten Ausführungsform der vorliegenden Erfindung besteht die Alkohol-Komponente des Polyesterpolyols zu wenigstens 90 Gew.-%, stärker bevorzugt zu wenigstens 95 Gew.-%, aus 1,4-Butandiol. Hierbei weist der Polyurethankunststoff eine Shore-D-Härte auf, die wenigstens um 3 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol-%% gemessen wird.

In einer weiteren besonders bevorzugten Ausführungsform der vorliegenden Erfindung besteht die Alkohol-Komponente des Polyesterpolyols zu wenigstens 90 Gew.-%, stärker bevorzugt zu wenigstens 95 Gew.-%, aus 1,4-Butandiol. Hierbei weist der Polyurethankunststoff eine Pendelhärte nach König auf, die wenigstens um 4 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- % gemessen wird.

## Verfahren

In noch einer weiteren Ausführungsform betrifft die vorliegende Erfindung ein Verfahren zur Herstellung von Polyurethankunststoffen mit besonders hoher Härte, enthaltend die Schritte

a) Vermischen eines Polyesterpolyols mit einem Anteil von sekundären Hydroxylgruppen an der Gesamtmenge der terminalen Hydroxylgruppen von höchstens 2 % mit wenigstens einem Polyisocyanat;

b) Reaktion des Gemisches zu einem Polyurethan.

Alle für die weiter oben offenbarten Ausführungsformen gegebenen Definitionen gelten auch für das erfindungsgemäße Verfahren.

Das Vermischen von Polyesterpolyol und Polyisocyanat in Verfahrensschritt a) kann mit allen dem Fachmann bekannten Verfahren erfolgen. Produkt des Verfahrensschritts a) ist die weiter oben in dieser Anmeldung definierte polymerisierbare Zusammensetzung.

Die Verfahren zur Reaktion einer polymerisierbaren Zusammensetzung zu einem Polyurethan sind dem Fachmann gut bekannt. Es können alle aus der Polyurethanchemie bekannten und für die spezifische polymerisierbare Zusammensetzung geeigneten Verfahren eingesetzt werden. Die Reaktion des Polyesterpolyols mit dem Polyisocyanat zu einem Polyurethan kann auf verschiedene Weise erfolgen, indem beispielsweise die Mischung in einem Reaktionsgefäß bis zu einem definierten Umsatz erwärmt wird oder die Mischung auf ein Substrat oder eine Form gebracht wird und die Reaktion auf dem Substrat oder der Form stattfindet. Außerdem ist es auch möglich die Mischung durch ein in-situ-Mischverfahren auf ein Substrat oder in eine Form zu bringen, wo dann die weitere Reaktion zum Polyurethan erfolgt. Das resultierende Polyurethan kann ggf. weiterhin in Folgereaktionen verarbeitet werden, indem z.B. im Fall von freien Isocyanatgruppen eine Kettenverlängerung mit Polyaminen durchgeführt wird oder aber eine Reaktion mit Luftfeuchtigkeit zu Polyurethanharnstoffen erfolgt. Eine Übersicht derartiger Verfahren findet sich im Kunststoffhandbuch, Bd. 7, Polyurethane; Becker, Braun und Oertel, Hanser Verlag, (1993).

Die oben beschriebenen Polyurethane können Eingang in verschiedenste Anwendungen insbesondere, als Formkörper, Elastomere, Klebstoffe, Beschichtungen, Folien, Dichtstoffe und Fasern finden. Diese sind u.a. in den Bänden des Kunststoffhandbuchs (s.o.) oder in: Polyurethane: Lacke, Kleb- und Dichtstoffe; Meier-Westhues, Vincentz-Verlag, (2007) beschrieben.

Die nachfolgenden Ausführungsbeispiele dienen nur dazu, die Erfindung zu illustrieren. Sie sollen den Schutzbereich der Patentansprüche in keiner Weise beschränken.

**Beispiele**

**Methoden und Begriffe:**

| | |
|---|---|
| Hydroxylzahl: | Die Bestimmung der OH-Zahl erfolgte gemäß der Vorschrift der DIN 53240-1 (Verfahren ohne Katalysator, Fassung v. Juni 2013). |
| Säurezahl | wurden gemäß DIN EN ISO 2114 (Juni 2002) bestimmt. |
| Viskosität: | Dynamische Viskosität: Rheometer MCR 51 der Firma Anton Paar entsprechend DIN 53019-1 (Fassung v. September 2008) mit einem Messkegel CP 50-1, Durchmesser 50 mm, Winkel 1° bei Scherraten von 25, 100, 200 und 500 s$^{-1}$. Die erfindungsgemäßen und nicht erfindungsgemäßen Polyole zeigen von der Scherrate unabhängige Viskositätswerte. |
| Shore Härte: | DIN ISO 7619-1; Fassung v. Feb. 2012 |
| Pendelhärte nach König: | DIN 55945; 2016-08 |

Spannung 100%, Spannung 300%, Reißspannung und Reißdehnung: DIN 53504 (Fassung v. 1.10.2009)

| | |
|---|---|
| Kennzahl: | Bezeichnet das mit 100 multiplizierte molare Verhältnis von NCOzu NCOreaktiven Gruppen einer Rezeptur |
| Anteil sekundärer OH-Endgruppen: | Quantitatives $^{13}$C-NMR, in Deuterochloroform, TMS = 0 ppm, Bruker AV III HD 600 MHz Spectrometer. |

**Herstellung der Polvesterpolvole**

(Herstellung des Polyesterpolyols Bsp. A-1:

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, legte man 1534,4 g (10,5 Mol, entspricht 53,32 Gew.-Tln.) Adipinsäure und 1343 g (11,369 Mol, entspricht 46,68 Gew.-Tln.) Hexandiol vor und erhitzte unter Stickstoffüberschleierung im Verlauf von 60 min. auf 200 °C, wobei ab einer Temperatur von ca. 150 °C Reaktionswasser abdestillierte. Nach ca. 3 Stunden kam die Abspaltung des Reaktionswassers zum Erliegen. Man vervollständigte die Umsetzung dadurch, dass man 24 ppm Zinn-II-chlorid-dihydrat zusetzte, durch Anlegen von Vakuum den Druck schrittweise im Verlauf von ca. 2 Std. auf zuletzt 15 mbar absenkte und die Reaktion bei 200 °C für weitere 15 Stunden fortführte.

Analyse des Polyesters:

Hydroxylzahl: 41,1 mg KOH/g

Säurezahl: 0,5 mg KOH/g

Viskosität: 1600 mPas bei 75 °C

Anteil sekundäre OH-Endgruppen: nicht nachweisbar

**Tabelle 1:** Synthese und Eigenschaften von erfindungsgemäßen und nicht erfindungsgemäßen (V=Vergleich) Polyesterpolyolen

| Beispiel | | A-1 | A-2(V) | A-3(V) | B-1 | B-2(V) | B-3(V) |
|---|---|---|---|---|---|---|---|
| **Rezeptur:** | | | | | | | |
| Adipinsäure | [Gew.-%] | 53,32 | 53,34 | 53,36 | 59,65 | 59,65 | 59,65 |
| 1,6-Hexandiol | [Gew.-%] | 46,68 | 44,66 | 41,64 | | | |
| 1,4-Cyclohexandiol | [Gew.-%] | | 2,0 | 5,0 | | | |
| 1,4-Butandiol | [Gew.-%] | | | | 40,35 | 38,35 | 35,35 |
| 2,3-Butandiol | [Gew.-%] | | | | | 2,0 | 5,0 |
| Zinn(II) chlorid*2H$_2$O | [ppm] | 24 | 24 | 24 | 20 | 20 | 20 |
| **Analytik:** | | | | | | | |
| OH-Zahl | [mgKOH/g] | 41,1 | 38,3 | 39,8 | 51,3 | 50,9 | 50,4 |
| Säurezahl | [mgKOH/g] | 0,5 | 0,7 | 1,0 | 0,5 | 0,3 | 0,3 |
| Viskosität 75 °C | [mPa*s] | 1600 | 1920 | 2350 | 1290 | 1080 | 1110 |
| Anteil primäre OH-Endgruppen | [mol-%] | 100 | 92 | 81 | 100 | 90 | 74 |
| Anteil sekundärer OH-Endgruppen | [mol-%] | Nicht nachweisbar | 8 | 19 | Nicht nachweisbar | 10 | 26 |

Die Polyesterpolyole A-2(V) und A-3(V) wurden analog, wie für das Bspl. A-1 beschrieben, hergestellt.

Bei den Polyesterpolyolen B-1 bis B-3(V) ist es vor dem Hintergrund des tieferen Siedepunktes von 1,4-Butandiol gegenüber 1,6-Hexandiol bei der gewählten Fahrweise erforderlich, den auftretenden Verlust an OH-Gruppen durch Nachsatz von 1,4-Butandiol und anschließendem Äquilibrieren (180 °C, 6 Std. Rühren bei Normaldruck) auszugleichen, um so die in Tabelle 1 angegebenen OH-Zahlen zu erreichen.

Die Tabelle 1 zeigt erwartungsgemäß, dass nur die Polyesterpolyole A-1 und B-1 praktisch ausschließlich primäre Hydroxylendgruppen aufweisen. Die Vergleichsbeispiele A-2(V), A-3(V), B-2(V) und B-3(V) weisen im Lichte der geringen Mengen an eingesetztem Diol mit sekundären Hydroxylgruppen überraschend hohe Anteile an sekundären Hydroxylendgruppen auf, wie folgende Betrachtung ausführt:

Im Bspl. A-2(V) werden insgesamt 756,9 mmol primäre Hydroxylgruppen in Form von 1,6-Hexandiol und 34,5 mmol sekundäre Hydroxylgruppen in Form von 1,4-Cyclohexandiol eingesetzt; somit beträgt der Anteil an sekundären Hydroxylgruppen 34,5/(34,4+756,9) * 100 = 4,3 Mol-%. Im Polyesterpolyol liegen gemessen an der Eduktmischung mit 8 Mol-% überproportional viele sekundäre Hydroxylgruppen vor. Hierdurch wird deutlich, dass der Anteil an Verunreinigungen wie Cyclohexandiol, der für die Herstellung eines Polyesterpolyols mit definertem Anteil an sekundären Hydroxylgruppen an der Gesamtmenge der terminalen Hydroxylgruppen nicht durch einfache stöchiometrische Berechnungen ermittelt werden kann.

**Herstellung der Polyurethane**

Zur Herstellung der Polyurethane werden die in Tabelle 1 aufgeführten Polyester mit einem handelsüblichen Polyisocyanat (Desmodur N3300) im Verhältnis (NCO/OH: 1,0) vernetzt. Zum Erhalt geeigneter Prüfkörper wird ein Verlaufsmittel (Byk 302; 0.1 Gew.-%) und ein für diese Reaktion üblicher Katalysator (DBTL, 10% in Butylacetat; 0,02 Gew.-% auf Festgehalt) eingesetzt.

Die Herstellung der 2-Komponentensysteme und Prüfkörper auf Basis der Polyester und des Polyisocyanats erfolgt nach folgender Detailformulierung und nachfolgend beschriebenen Arbeitsschritten:

Polyester            174,68 g

(fortgesetzt)

| Desmodur N 3300 | 24,72 g |
| DBTL, 10%ig in Butylacetat | 0,40 g |
| BYK 302 | 0,2 g |
| Summe | 200,00 g |

Der Polyester wird in ein geeignetes Gefäß eingewogen und auf 80 °C erwärmt. Das Polyisocyanat (Desmodur N 3300) wird ebenfalls auf 80°C vortemperiert und unter händischem Rühren im Verhältnis NCO:OH = 1:1 zugeben. Berechnung: 247=(% OH)/(% NCO) = m [g] Isocyanat auf 100g Polyol

Der Katalysator DBTL mit 0,02% (auf Festgehalt) und Byk 302 mit 0,1% (auf Festgehalt) werden unmittelbar nach der Zugabe des Polyisocyanates und erfolgter Homogenisierung zugeben und kräftig, aber möglichst blasenfrei verrührt.

Die vernetzten Systeme werden nachfolgend sofort verarbeitet:
Mittels eines Rakels werden die Systeme auf eine Glasplatte und einem Trägerpapier für freie Filme mit 500 $\mu$m Nassfilm aufgezogen.

Die aufgezogenen Lackfilme werden 16h bei 80°C im Umluftofen temperiert.

Nach dem Temperieren der Glasplatten werden diese ca. 1 Stunde bei Raumtemperatur (ca. 23°C) konditioniert. Danach wird die Schichtdicke gemessen und der Lackfilm nach weiteren Kriterien abgemustert.

Zur Bestimmung der Shorehärte wird ein weiterer Prüfkörper gegossen. Dazu wird das vernetzte System in einen Kunststoffdeckel mit ca. 6cm Durchmesser blasenfrei appliziert und ebenfalls 16 h bei 80°C temperiert. Der entstandene Prüfkörper soll einen Durchmesser von mindestens 35 mm und eine Dicke von mindestens 6 mm haben. Vor den anwendungstechnischen Prüfungen werden alle Prüfkörper ausreichend lang im Normklima (für Kunststoffe, 23°C, 50% rel. Luftfeuchte) konditioniert. Die Prüfungen der Shorehärten, der Pendelhärte nach König und die Durchführung der Zug-Dehnprüfungen erfolgen entsprechend der dem Fachmann bekannten, zugrundliegenden Normen.

**Tabelle 2:** Ergebnisse der anwendungstechnischen Prüfung von Beschichtungen, die aus den oben beschriebenen Polyurethanen erhalten wurden

| | Shore-Härte | | Pendelhärte nach König | | Zugprüfung |
|---|---|---|---|---|---|
| | Shore A | Shore D | Nach 16 Stunden [s] | Nach 7 Tagen [s] | 100% Modul [N / mm$^2$] |
| | | | | | |
| A-1 | 86 | 41 | 80 | 80 | 9,42 |
| A-2(V) | 80 | 34 | 68 | 69 | 6,01 |
| A-3(V) | 77 | 22 | 52 | 59 | 4,57 |
| B-1 | 68 | 20 | 134 | 150 | 6,10 |
| B-2(V) | 62 | 19 | 136 | 138 | 4,15 |
| B-3(V) | 55 | 16 | 112 | 104 | 2,27 |

Auswertung durch lineare Regression zeigt:
**A1 bis A3:**

Abnahme Shore D: 2,4 % pro Mol-% sekundäre OH-Gruppe; $R^2$=1,00
Abnahme Pendelhärte: 1,4 % pro Mol-% sekundäre OH-Gruppe; $R^2$=0,98

**B1 bis B3:**

Abnahme Shore D: 0,7 % pro Mol-% sekundäre OH-Gruppe; $R^2$=0,97
Abnahme Pendelhärte: 1,13 % pro Mol-% sekundäre OH-Gruppe; $R^2$=0,97

Die ausgesprochen hohen Korrelationskoeffizienten zeigen, dass der Zusammenhang zwischen dem Gehalt an sekundären OH-Gruppen und Schwächung der mechanischen Eigenschaften sehr eng ist, so dass die beobachteten Effekte auch für sehr kleine Differenzen des Gehalts an sekundären OH-Gruppen zuverlässig extrapoliert werden können.

**Patentansprüche**

1. Polyesterpolyol mit einem Anteil von sekundären OH-Gruppen an der Gesamtmenge der terminalen OH-Gruppen von höchstens 2 mol-%.

2. Polymerisierbare Zusammensetzung enthaltend wenigstens ein Polyesterpolyol gemäß Anspruch 1 und wenigstens ein Polyisocyanat.

3. Verwendung eines Polyesterpolyols gemäß Anspruch 1 oder einer polymerisierbaren Zusammensetzung gemäß Anspruch 2 zur Herstellung eines Polyurethankunststoffs.

4. Die Verwendung gemäß Anspruch 3, wobei die Alkohol-Komponente des Polyesterpolyols zu wenigstens 90 Gew.-% aus 1,6-Hexandiol besteht und der Polyurethankunststoff eine Shore-D-Härte aufweist, die wenigstens um 7 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- %gemessen wird.

5. Die Verwendung gemäß Anspruch 3, wobei die Alkohol-Komponente des Polyesterpolyols zu wenigstens 90 Gew.-% aus 1,4-Butandiol besteht und der Polyurethankunststoff eine Shore-D-Härte aufweist, die wenigstens um 4 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- %gemessen wird.

6. Die Verwendung gemäß Anspruch 3, wobei die Alkohol-Komponente des Polyesterpolyols zu wenigstens 90 Gew.-% aus 1,6-Hexandiol besteht und der Polyurethankunststoff eine Pendelhärte nach König aufweist, die wenigstens um 2 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol-%gemessen wird.

7. Die Verwendung gemäß Anspruch 3, wobei die Alkohol-Komponente des Polyesterpolyols zu wenigstens 90 Gew.-% aus 1,4-Butandiol besteht und der Polyurethankunststoff eine Pendelhärte nach König aufweist, die wenigstens um 3% über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol- % gemessen wird.

8. Verfahren zur Herstellung von Polyurethankunststoffen mit besonders hoher Härte, enthaltend die Schritte

    a) Vermischen eines Polyesterpolyols gemäß Anspruch 1 mit wenigstens einem Polyisocyanat;
    b) Reaktion des Gemisches zu einem Polyurethan.

9. Das Verfahren gemäß Anspruch 8, wobei die Alkohol-Komponente des Polyesterpolyols zu wenigstens 90 Gew.-% aus 1,6-Hexandiol besteht und der Polyurethankunststoff eine Shore-D-Härte aufweist, die wenigstens um 7 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol-% gemessen wird.

10. Das Verfahren gemäß Anspruch 8, wobei die Alkohol-Komponente des Polyesterpolyols zu wenigstens 90 Gew.-% aus 1,4-Butandiol besteht und der Polyurethankunststoff eine Shore-D-Härte aufweist, die wenigstens um 3 % über dem Wert liegt, der bei Verwendung eines ansonsten identischen Polyesterpolyols mit einem Anteil von sekundären OH-Gruppen an der Gesamtmenge der terminalen OH-Gruppen von wenigstens 5 mol-% gemessen wird.

11. Das Verfahren nach einem der Ansprüche 8 bis 10, wobei das in Verfahrensschritt a) entstandene Reaktionsgemisch vor dem Aushärten in Verfahrensschritt b) auf eine Oberfläche aufgetragen wird.

12. Polyurethankunststoff erhältlich durch das Verfahren gemäß einem der Ansprüche 8 bis 11.

**Europäisches Patentamt**
**European Patent Office**
**Office européen des brevets**

# EUROPÄISCHER RECHERCHENBERICHT

**Nummer der Anmeldung**

EP 18 19 0762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GRADINARU LUIZA MADALINA ET AL: "Poly(alkylene sebacate ether)urethane hydrogels for indomethacin delivery formulations", JOURNAL OF POLYMER RESEARCH, SPRINGER NETHERLANDS, NL, Bd. 24, Nr. 7, Juni 2017 (2017-06), Seiten 1-13, XP036272072, ISSN: 1022-9760, DOI: 10.1007/S10965-017-1259-7 [gefunden am 2017-06-01] * Seite 2, rechte Spalte - Seite 3 * ----- | 1-12 | INV. C08G18/79 C08G63/16 C09D175/06 C08G18/42 |
| X | WO 2017/050738 A1 (BASF SE [DE]) 30. März 2017 (2017-03-30) * Beispiel 7 * ----- | 1-3,5,7, 8,10,12 | |
| X | WO 2017/144502 A1 (BASF SE [DE]) 31. August 2017 (2017-08-31) * Beispiele 9,10,13,23,24,29 * ----- | 1-3,5,7, 8,10,12 | |
| X | GB 2 272 904 A (BAXENDEN CHEM LTD [GB]) 1. Juni 1994 (1994-06-01) * Ansprüche 1,26; Beispiel 1 * ----- | 1-3,5,7, 8,10,12 | RECHERCHIERTE SACHGEBIETE (IPC) C08G C09D |
| X | WO 2013/130173 A1 (SAUDI BASIC IND CORP [SA]; ALIDEDEOGLU HUSNU ALP [US]) 6. September 2013 (2013-09-06) * Absatz [0078]; Anspruch 1 * ----- | 1-3,5,7, 8,10,12 | |
| X | WO 2013/130174 A1 (SAUDI BASIC IND CORP [SA]; ALIDEDEOGLU HUSNU ALP [US]) 6. September 2013 (2013-09-06) * Absatz [0071]; Anspruch 1 * ----- | 1-3,5,7, 8,10,12 | |
| X | EP 0 626 402 A2 (AMOCO CORP [US]) 30. November 1994 (1994-11-30) * Beispiele 7,11,13,15 * ----- | 1-4,6,8, 9,12 | |

-/--

Der vorliegende Recherchenbericht wurde für alle Patentansprüche erstellt

| Recherchenort | Abschlußdatum der Recherche | Prüfer |
|---|---|---|
| München | 31. Januar 2019 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

European Patent Office

Office européen des brevets

**EUROPÄISCHER RECHERCHENBERICHT**

Nummer der Anmeldung

EP 18 19 0762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KNAUTH P ET AL: "Combustion calorimetry on milligram samples of hygroscopic solid substances with a CRMT rocking bomb calorimeter thermochemical study of omega-alkanediols at 298.15 K. Part II", JOURNAL OF CHEMICAL THERMODYNAMICS, ACADEMIC PRESS, LONDON, GB, Bd. 21, Nr. 7, Juli 1989 (1989-07), Seiten 779-784, XP023945684, ISSN: 0021-9614, DOI: 10.1016/0021-9614(89)90063-3 [gefunden am 1989-07-01] * Seite 779, letzter Absatz * ----- | 1-12 | |
| X | US 3 605 848 A (LOMBARDI FRANK G ET AL) 20. September 1971 (1971-09-20) * Beispiele 1,3 * ----- | 1-3,8,12 | |
| X | WO 2013/024107 A1 (BAYER IP GMBH [DE]; NEFZGER HARTMUT [DE]; HOFMANN JOERG [DE]; LORENZ K) 21. Februar 2013 (2013-02-21) * Beispiele 1,3a * ----- | 1-3,8,12 | RECHERCHIERTE SACHGEBIETE (IPC) |
| X | WO 2013/024108 A1 (BAYER IP GMBH [DE]; NEFZGER HARTMUT [DE]; HOFMANN JOERG [DE]; LORENZ K) 21. Februar 2013 (2013-02-21) * Beispiele 1,3a * ----- | 1-3,8,12 | |
| X | WO 2011/000546 A1 (BAYER MATERIALSCIENCE AG [DE]; NEFZGER HARTMUT [DE]; HOFMANN JOERG [DE] 6. Januar 2011 (2011-01-06) * Seite 12, Zeilen 9,10 * * Seite 15 * ----- | 1-3,8,12 | |
| X | DE 10 2011 078768 A1 (BAYER MATERIALSCIENCE AG [DE]) 10. Januar 2013 (2013-01-10) * Beispiele 2,3 * ----- | 1-3,8,12 | |

-/--

Der vorliegende Recherchenbericht wurde für alle Patentansprüche erstellt

| Recherchenort | Abschlußdatum der Recherche | Prüfer |
|---|---|---|
| München | 31. Januar 2019 | Lanz, Sandra |

EPO FORM 1503 03.82 (P04C03)

Seite 2 von 3

Europäisches
Patentamt

European
Patent Office

Office européen
des brevets

# EUROPÄISCHER RECHERCHENBERICHT

**Nummer der Anmeldung**

EP 18 19 0762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/144765 A1 (BASF SE [DE]) 1. Oktober 2015 (2015-10-01) * Beispiele 9,12-19 * ----- | 1-3,8,12 | |
| X | WO 2011/083000 A1 (BASF SE [DE]; GEHRINGER LIONEL [FR]; DUWENHORST JOERN [DE]; LAMMERS FI) 14. Juli 2011 (2011-07-14) * Beispiel 8; Tabelle 2 * ----- | 1-3,8,12 | |
| A | Dupont: "Product Data Sheet", , Mai 2016 (2016-05), XP055549570, Gefunden im Internet: URL:http://duponttateandlyle.com/sites/def ault/files/Susterra(R)%20Product%20Data%20 Sheet%20-%20Glycols.pdf [gefunden am 2019-01-30] * das ganze Dokument * ----- | 1-12 | |
| E | WO 2019/002263 A1 (BASF SE [DE]) 3. Januar 2019 (2019-01-03) * Seite 23, Zeilen 1-3; Beispiel 6; Tabelle 1 * ----- | 1-3,5,7, 8,12 | **RECHERCHIERTE SACHGEBIETE (IPC)** |
| E | WO 2018/210608 A1 (BASF SE [DE]) 22. November 2018 (2018-11-22) * Beispiele ii-3; Tabelle 1 * ----- | 1-3,5,7, 8,12 | |

Der vorliegende Recherchenbericht wurde für alle Patentansprüche erstellt

| Recherchenort | Abschlußdatum der Recherche | Prüfer |
|---|---|---|
| München | 31. Januar 2019 | Lanz, Sandra |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes
  Dokument

EPO FORM 1503 03.82 (P04C03)

Seite 3 von 3

**ANHANG ZUM EUROPÄISCHEN RECHERCHENBERICHT**
**ÜBER DIE EUROPÄISCHE PATENTANMELDUNG NR.**   EP 18 19 0762

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2019

| Im Recherchenbericht angeführtes Patentdokument | Datum der Veröffentlichung | Mitglied(er) der Patentfamilie | Datum der Veröffentlichung |
|---|---|---|---|
| WO 2017050738 A1 | 30-03-2017 | BR 112018004019 A2<br>CN 108026233 A<br>EP 3353222 A1<br>JP 2018528318 A<br>US 2018265621 A1<br>WO 2017050738 A1 | 11-12-2018<br>11-05-2018<br>01-08-2018<br>27-09-2018<br>20-09-2018<br>30-03-2017 |
| WO 2017144502 A1 | 31-08-2017 | AU 2017224357 A1<br>BR 112018015669 A2<br>CN 109071939 A<br>EP 3420032 A1<br>WO 2017144502 A1 | 23-08-2018<br>18-12-2018<br>21-12-2018<br>02-01-2019<br>31-08-2017 |
| GB 2272904 A | 01-06-1994 | KEINE | |
| WO 2013130173 A1 | 06-09-2013 | CN 104144965 A<br>EP 2820062 A1<br>JP 5925341 B2<br>JP 2015513594 A<br>US 2013231440 A1<br>US 2015065610 A1<br>WO 2013130173 A1 | 12-11-2014<br>07-01-2015<br>25-05-2016<br>14-05-2015<br>05-09-2013<br>05-03-2015<br>06-09-2013 |
| WO 2013130174 A1 | 06-09-2013 | CN 104144966 A<br>EP 2820063 A1<br>JP 5818185 B2<br>JP 2015511979 A<br>US 2013231420 A1<br>US 2015210803 A1<br>WO 2013130174 A1 | 12-11-2014<br>07-01-2015<br>18-11-2015<br>23-04-2015<br>05-09-2013<br>30-07-2015<br>06-09-2013 |
| EP 0626402 A2 | 30-11-1994 | CA 2123843 A1<br>DE 69431086 D1<br>DE 69431086 T2<br>EP 0626402 A2<br>ES 2183829 T3<br>US 5512635 A<br>US 5559190 A<br>US 5589548 A<br>US 5621047 A<br>US 5731383 A | 28-11-1994<br>05-09-2002<br>08-05-2003<br>30-11-1994<br>01-04-2003<br>30-04-1996<br>24-09-1996<br>31-12-1996<br>15-04-1997<br>24-03-1998 |
| US 3605848 A | 20-09-1971 | KEINE | |
| WO 2013024107 A1 | 21-02-2013 | CN 103974988 A<br>EP 2744839 A1 | 06-08-2014<br>25-06-2014 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**                          EP 18 19 0762

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2019

| Im Recherchenbericht angeführtes Patentdokument | Datum der Veröffentlichung | Mitglied(er) der Patentfamilie | Datum der Veröffentlichung |
|---|---|---|---|
| | | US 2014234613 A1 | 21-08-2014 |
| | | WO 2013024107 A1 | 21-02-2013 |
| WO 2013024108 A1 | 21-02-2013 | KEINE | |
| WO 2011000546 A1 | 06-01-2011 | BR PI1015039 A2 | 12-04-2016 |
| | | CN 102471444 A | 23-05-2012 |
| | | EP 2448987 A1 | 09-05-2012 |
| | | JP 5540093 B2 | 02-07-2014 |
| | | JP 2012531505 A | 10-12-2012 |
| | | PL 2448987 T3 | 31-08-2017 |
| | | RU 2012103237 A | 10-08-2013 |
| | | US 2012123008 A1 | 17-05-2012 |
| | | WO 2011000546 A1 | 06-01-2011 |
| | | ZA 201108836 B | 27-05-2015 |
| DE 102011078768 A1 | 10-01-2013 | KEINE | |
| WO 2015144765 A1 | 01-10-2015 | CN 106536587 A | 22-03-2017 |
| | | EP 3122795 A1 | 01-02-2017 |
| | | JP 2017512863 A | 25-05-2017 |
| | | KR 20160143700 A | 14-12-2016 |
| | | US 2017233520 A1 | 17-08-2017 |
| | | WO 2015144765 A1 | 01-10-2015 |
| WO 2011083000 A1 | 14-07-2011 | BR 112012014686 A2 | 05-04-2016 |
| | | CN 102782006 A | 14-11-2012 |
| | | EP 2513189 A1 | 24-10-2012 |
| | | ES 2557289 T3 | 25-01-2016 |
| | | JP 5684282 B2 | 11-03-2015 |
| | | JP 2013514406 A | 25-04-2013 |
| | | KR 20120103708 A | 19-09-2012 |
| | | US 2012258269 A1 | 11-10-2012 |
| | | WO 2011083000 A1 | 14-07-2011 |
| WO 2019002263 A1 | 03-01-2019 | KEINE | |
| WO 2018210608 A1 | 22-11-2018 | KEINE | |

EPO FORM P0461

Für nähere Einzelheiten zu diesem Anhang : siehe Amtsblatt des Europäischen Patentamts, Nr.12/82

Seite 2 von 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2213696 A

### In der Beschreibung aufgeführte Nicht-Patentliteratur

- **M. IONESCU.** Chemistry and Technology of Polyols for Polyurethanes. Rapra Technology Ltd, 2005
- Polyurethanes, Chemistry and Technology. **J.H. SAUNDERS ; K.C. FRISCH.** Chemistry. Inscience Publishers John Wiley& Sons, 1962
- Kunststoffhandbuch. **BECKER ; BRAUN ; OERTEL.** Polyurethane. Hanser Verlag, 1993, vol. 7
- **KLEB ; DICHTSTOFFE ; MEIER-WESTHUES.** Polyurethane: Lacke. Vincentz-Verlag, 2007